# EUROPEAN PATENT SPECIFICATION

(11) **EP 4 129 138 B1**
(45) Date of publication and mention of the grant of the patent: **28.08.2024**
(21) Application number: 21830309.7
(22) Date of filing: 23.11.2021
(51) Int. Cl.: A47L 9/16

(54) **SEPARATION STRUCTURE OF DUST CUP OF DUST COLLECTOR**
TRENNVORRICHTUNG FÜR DEN STAUBBECHER EINES STAUBSAUGERS
STRUCTURE DE SÉPARATION DE BAC À POUSSIÈRE DE COLLECTEUR DE POUSSIÈRE

(30) Priority: 17.06.2021 CN 202121353171 U
(43) Date of publication of application: 08.02.2023
(73) Proprietor: SHENZHEN SHERMON TECHNOLOGY CO., LIMITED, Shenzhen, Guangdong 518000 (CN)
(72) Inventor: LU, Pengfei, Shenzhen, Guangdong 518000 (CN)
(74) Representative: Ipey
(86) International application number: PCT/CN2021/132320
(87) International publication number: WO 2022/262196

(56) References cited:
- WO-A2-2020/183092
- CN-A- 1 969 738
- CN-A- 1 985 748
- CN-A- 101 184 424
- CN-A- 107 440 610
- CN-U- 203 468 516
- CN-U- 208 709 744
- KR-A- 20060 031 443
- US-A1- 2006 230 724

## Description

### TECHNICAL FIELD

The present disclosure relates to relates to the technical field of vacuum cleaners, in particular to a separation structure for a dust cup of a vacuum cleaner.

### BACKGROUND

A dust cup is essential for a vacuum cleaner. When the vacuum cleaner operates, the mixture of air and waste is sucked into the dust cup by a motor-driven brush. After the waste is separated from the air by a separator in the dust cup, the waste is stored in the dust cup, and the air is discharged from an exhaust port of the motor. The separator in the dust cup may be of a single-cone type or a multi-cone type. The multi-cone separator has good separation effect and is popular with consumers. However, the existing dust cup with the multi-cone separator has the following disadvantages.

Firstly, the multi-cone separator has a complex structure and occupies a large space, so that the dust cup has a large size and requires to be driven by a high-power motor.

Secondly, a sedimentation cone and an intake tube of the multi-cone separator are independent components, which not only need to be produced separately, but also need to be manually assembled, resulting in increased production cost of the dust cup.

CN203468516U discloses a tertiary cyclone vacuum cleaner includes an outer dust barrel. The outer dust barrel is provided with outer tangential air inlets and further internally provided an inner dust barrel. A screen barrel corresponding to the outer tangential air inlets is arranged above the inner dust barrel, and the inner dust barrel and the outer dust barrel as well as the screen barrel and the outer dust barrel enclose to form primary cyclone chambers. The screen barrel is further sleeved on a spiral barrel and a group of spiral cone barrels, a circle enclosed by the spiral cone barrels is provided with an air leading barrel which is inserted into the spiral barrel. The upper end of the spiral barrel is provided with secondary tangential air inlets, and the upper end of the each spiral cone barrel is provided with a tertiary tangential air inlet. The spiral cone barrels are covered with an air outlet cover, the reverse side of the air outlet cover is provided with air outlet barrels corresponding to the spiral cone barrel, and the air outlet barrels extend into the corresponding spiral cone barrels. A screen cover plate is arranged above the air outlet cover and filled with filter cotton. However, both the dust in the spiral cone barrel and the dust in the spiral barrel are deposited at the bottom of the inner dust barrel which is located bellow the spiral barrel, resulting in lower efficiency of separation of the dust from the air.

### SUMMARY

In order to solve the above problems, the present disclosure provides a separation structure for a dust cup of a vacuum cleaner.

The present disclosure is realized by the following technical schemes.

The present disclosure provides a separation structure for a dust cup of a vacuum cleaner. The separation structure includes a main body and a separator. The separator is fixedly mounted in an internal space of the main body. The internal space of the main body is divided by the separator into a first chamber, a second chamber and a third chamber. The separator is provided with a through hole, an air intake portion and a plurality of sedimentation portions communicated with the air intake portion. The plurality of sedimentation portions are arranged around the air intake portion. A length of the air intake portion is smaller than a length of each of the plurality of sedimentation portions. The air intake portion is communicated with the second chamber, the plurality of sedimentation portions are communicated with the third chamber. The first chamber is communicated with the second chamber via the through hole. A bottom of the second chamber and a bottom of the third chamber are separated such that small particles of waste is deposited separately at the bottoms of the second chamber and the third chamber.

In an embodiment, a ratio of the length of each of the plurality of sedimentation portions to the length of the air intake portion is in a range of 1.5 to 2.5.

In an embodiment, the separation structure further includes a filter screen arranged along a periphery of the separator and covering the through hole.

In an embodiment, the separator is provided with a plurality of ventilation grooves, each of which corresponds to a respective one of the plurality of sedimentation portions. The plurality of sedimentation portions are communicated with the air intake portion through the plurality of ventilation grooves.

In an embodiment, each of the plurality of sedimentation portions includes a cylindrical tube and a conical tube communicated with the cylindrical tube. A length of the conical tube is greater than a length of the cylindrical tube. The conical tube is communicated with the third chamber, and the cylindrical tube is communicated with the air intake portion through a respective one of the plurality of ventilation grooves.

In an embodiment, the main body is further provided with a plurality of air outlet tubes, each of which corresponds to a respective one of the plurality of sedimentation portions and is received within the cylindrical tube.

In an embodiment, the separation structure further includes a filter cotton. A recess is defined by the main body to form a fourth chamber. The plurality of air outlet tubes are communicated with the fourth chamber. The filter cotton is received in the fourth chamber and covers the plurality of air outlet tubes.

In an embodiment, a distance from a center of the cylindrical tube to a center of the air intake portion is L, and a ratio of 2L to a maximum inner diameter of the air intake portion is in a range of 1.8 to 2.5.

In an embodiment, a ratio of a maximum inner diameter of the air intake portion to a maximum width of each of the plurality of ventilation grooves is in a range of 4.5 to 5.5.

In an embodiment, the main body is further provided with an air inlet communicated with the first chamber.

The present disclosure has the following advantageous effects.

In the separation structure according to the present disclosure, the separator has a simple structure, the length of the air intake portion is short, a resistance of the air intake portion to the air flow is very small, and the mixture of air and waste can travel a short distance from the air intake portion to each sedimentation portion. The length of the separator is reduced, so that the size of the dust cup adopting the separation structure is reduced, and a low-power motor is sufficient for driving the dust cup.

### BRIEF DESCRIPTION OF THE DRAWINGS

In order to illustrate the technical solutions according to the embodiments of the present disclosure more clearly, the accompanying drawings for describing the embodiments are introduced briefly in the following. Apparently, the accompanying drawings in the following description are merely some embodiments of the present disclosure, and those skilled in the art may derive other drawings from the accompanying drawings without creative efforts.
FIG. 1 is a sectional view of a separation structure for a dust cup of a vacuum cleaner according to an embodiment of the present disclosure.
FIG. 2 is a sectional view of a main body of the separation structure according to an embodiment of the present disclosure.
FIG. 3 is a perspective view of a separator of the separation structure according to an embodiment of the present disclosure.
FIG. 4 is another perspective view of the separator of the separation structure according to an embodiment of the present disclosure.

### DETAILED DESCRIPTION

For clearer and complete description to the technical schemes of the present disclosure, the present disclosure is described further with reference to the accompanying drawings.

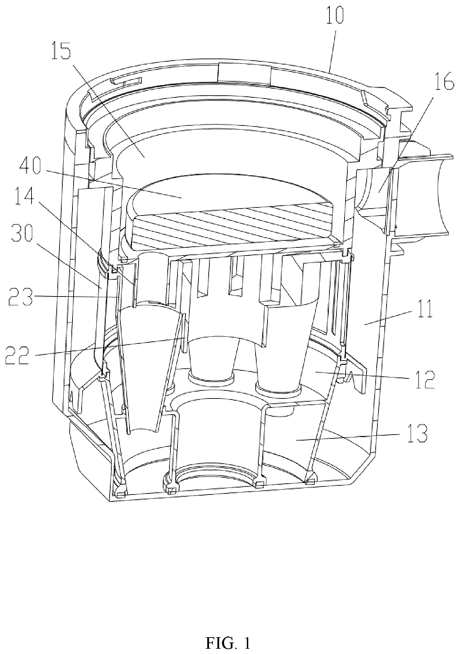

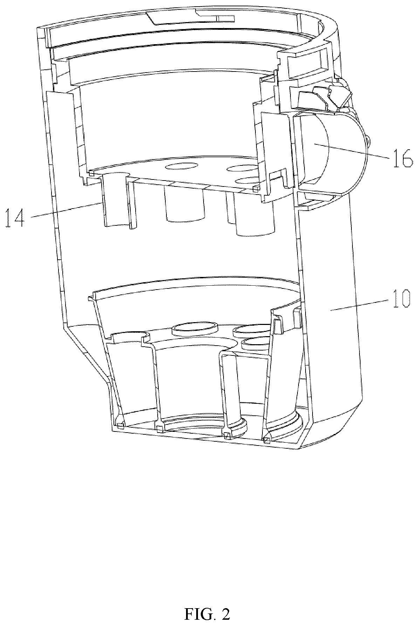

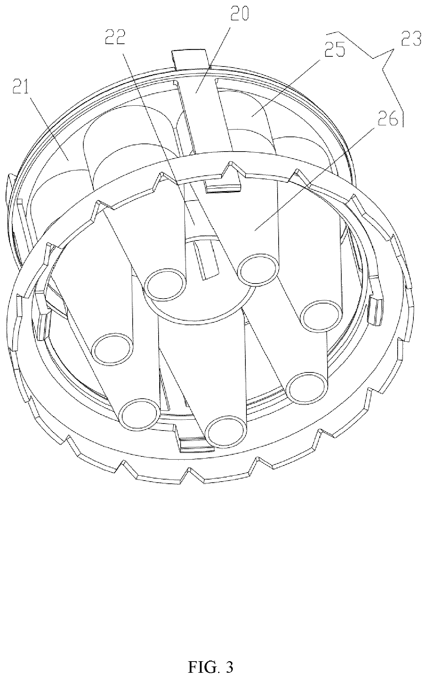

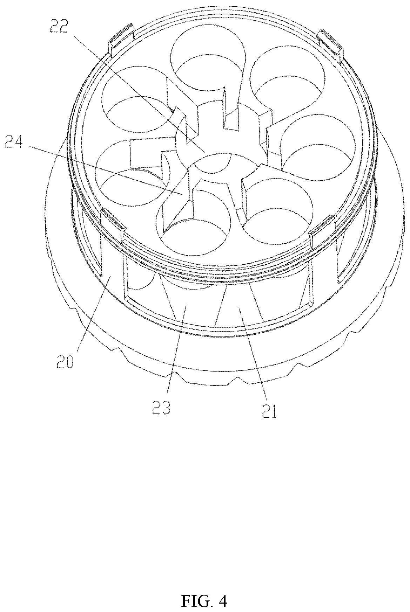

Referring to FIGS. 1 to 4, an embodiment of the present disclosure provides a separation structure for a dust cup of a vacuum cleaner. The separation structure includes a main body 10 and a separator 20. The separator 20 is fixedly mounted in an internal space of the main body 10. The internal space of the main body 10 is divided by the separator 20 into three chambers, i.e., a first chamber 11, a second chamber 12, and a third chamber 13. The separator 20 is provided with a through hole 21, an air intake portion 22, and a plurality of sedimentation portions 23 communicated with the air intake portion 22. The plurality of sedimentation portions 23 are arranged around the air intake portion 22. A length of the air intake portion 22 is smaller than a length of each sedimentation portion 23. The air intake portion 22 is communicated with the second chamber 12, the sedimentation portions 23 are communicated with the third chamber 13, and the first chamber 11 is communicated with the second chamber 12 via the through hole 21.

In this embodiment, the air intake portion 22 is a circular tube. The air intake portion 22 and the sedimentation portions 23 are both located within the second chamber 12.

In this embodiment, the separator 20 of the separation structure has a simple structure, the length of the air intake portion 22 is short, a resistance of the air intake portion 22 to the air flow is very small, and the mixture of air and waste can travel a short distance from the air intake portion 22 to each sedimentation portion 23. The length of the separator 20 is reduced, so that the size of the dust cup adopting the separation structure is reduced, and a low-power motor is sufficient for driving the dust cup.

In the present embodiment, the separator 20 is integrally formed without manual assembly, thereby reducing the production cost of the dust cup adopting the separation structure.

Further, a ratio of the length of each sedimentation portion 23 to the length of the air intake portion 22 is in a range of 1.5 to 2.5.

Further, the separation structure further includes a filter screen 30 arranged along a periphery of the separator 20. The filter screen 30 covers the through hole 21.

Further, the main body 10 also has an air inlet 16 communicated with the first chamber 11.

Further, the separator 20 is provided with a plurality of ventilation grooves 24, each of which corresponds to a respective sedimentation portions 23. The sedimentation portions 23 are communicated with the air intake portion 22 through the ventilation grooves 24.

Further, a ratio of a maximum inner diameter of the air intake portion 22 to a maximum width of each ventilation groove 24 is in a range of 4.5 to 5.5.

In this embodiment, when the dust cup adopting the separation structure is driven by a motor, the mixture of air and waste enters the first chamber 11 through the air inlet 16 and forms a rotating air flow, and a primary separation of the mixture of air and waste occurs with the filter 30. Large particles of the waste are prevented from entering the second chamber 12 by the filter 30, and gradually deposited at a bottom of the first chamber 11. The mixture of air and waste then enters the air intake portion 22 under the drive of the motor, and spirals up within the air intake portion 22 for a secondary separation, and a part of small particles of the waste is gradually deposited at a bottom of the second chamber 12. The mixture of air and waste then enters the sedimentation portions 23 through the ventilation grooves 24 under the drive of the motor, and by this time, the air flow formed by the mixture of air and waste has a higher rotating speed for a tertiary separation. Another part of the small particles of the waste is gradually deposited at a bottom of the third chamber 13 through the sedimentation portions 23, and by this time, most of the waste has been separated from the air.

In this embodiment, the air inlet 16 is provided on a side surface of the main body 10, and a flow path of the mixture of air and waste from the air inlet 16 to each sedimentation portion 23 can be shortened.

Further, each sedimentation portion 23 includes a cylindrical tube 25 and a conical tube 26 communicated with the cylindrical tube 25. A length of the conical tube 26 is greater than a length of the cylindrical tube 25. The conical tube 26 is communicated with the third chamber 13, and the cylindrical tube 25 is communicated with the air intake portion 22 through a respective ventilation groove 24.

Further, a distance from a center of the cylindrical tube 25 to a center of the air intake portion 22 is L, and a ratio of 2L to the maximum inner diameter of the air intake portion 22 is in a range of 1.8 to 2.5.

In this embodiment, when the dust cup adopting the separation structure is driven by a motor, the mixture of air and waste enters the first chamber 11 through the air inlet 16 and forms a rotating air flow, and a primary separation of the mixture of air and waste occurs with the filter 30. Large particles of the waste are prevented from entering the second chamber 12 by the filter 30, and gradually deposited at a bottom of the first chamber 11. The mixture of air and waste then enters the air intake portion 22 under the drive of the motor, and spirals up within the air intake portion 22 for a secondary separation, and a part of small particles of the waste is gradually deposited at a bottom of the second chamber 12. The mixture of air and waste then enters the cylindrical tubes 25 through the ventilation grooves 24 under the drive of the motor, and by this time, the air flow formed by the mixture of air and waste has a higher rotating speed for a tertiary separation. Another part of the small particles of the waste is gradually deposited at a bottom of the third chamber 13 through the conical tubes 26, and by this time, most of the waste has been separated from the air.

Further, the main body 10 is provided with a plurality of air outlet tubes 14 each of which corresponds to a respective sedimentation portion 23. Each air outlet tube 14 is received within a respect cylindrical tube 25.

Further, the separation structure further includes a filter cotton 40. A recess is defined by the main body 10 to form a fourth chamber 15. The air outlet tubes 14 are communicated with the fourth chamber 15. The filter cotton 40 is received in the fourth chamber 15 and covers the air outlet tubes 14.

In this embodiment, when the dust cup adopting the separation structure is driven by a motor, the mixture of air and waste enters the first chamber 11 through the air inlet 16 and forms a rotating air flow, and a primary separation of the mixture of air and waste occurs with the filter 30. Large particles of the waste are prevented from entering the second chamber 12 by the filter 30, and gradually deposited at a bottom of the first chamber 11. The mixture of air and waste then enters the air intake portion 22 under the drive of the motor, and spirals up within the air intake portion 22 for a secondary separation, and a part of small particles of the waste is gradually deposited at a bottom of the second chamber 12. The mixture of air and waste then enters the cylindrical tubes 25 through the ventilation grooves 24 under the drive of the motor, and by this time, the air flow formed by the mixture of air and waste has a higher rotating speed for a tertiary separation. Another part of the small particles of the waste is gradually deposited at a bottom of the third chamber 13 through the conical tubes 26. The mixture of air and waste then enters the fourth chamber 15 through the air outlet tubes 14 with driving of the motor, and the waste is finally separated from the air through the filter cotton 40. The remaining small particles of the waste are adsorbed by the filter cotton 40, thereby achieving complete separation of the waste from the air.

## Claims

1. A separation structure for a dust cup of a vacuum cleaner, wherein the separation structure comprises a main body (10) and a separator (20), the separator (20) is fixedly mounted in an internal space of the main body (10), the internal space of the main body (10) is divided by the separator (20) into a first chamber (11), a second chamber (12) and a third chamber (13), the separator (20) is provided with a through hole (21), an air intake portion (22) and a plurality of sedimentation portions (23) communicated with the air intake portion (22), the plurality of sedimentation portions (23) are arranged around the air intake portion (22), a length of the air intake portion (22) is smaller than a length of each of the plurality of sedimentation portions (23), the air intake portion (22) is communicated with the second chamber (12), the plurality of sedimentation portions (23) are communicated with the third chamber (13), and the first chamber (11) is communicated with the second chamber (12) via the through hole (21), **characterized in that**
a lower portion of the second chamber (12) is separated from the third chamber (13) such that small particles of waste are deposited separately at bottoms of the second chamber (12) and the third chamber (13).

2. The separation structure according to claim 1, wherein a ratio of the length of each of the plurality of sedimentation portions (23) to the length of the air intake portion (22) is in a range of 1.5 to 2.5.

3. The separation structure according to claim 1, further comprising a filter screen (30) arranged along a periphery of the separator (20) and covering the through hole (21).

4. The separation structure according to claim 1, wherein the separator (20) is provided with a plurality of ventilation grooves (24), each of which corresponds to a respective one of the plurality of sedimentation portions (23), and the plurality of sedimentation portions (23) are communicated with the air intake portion (22) through the plurality of ventilation grooves (24).

5. The separation structure according to claim 4, wherein each of the plurality of sedimentation portions (23) comprises a cylindrical tube (25) and a conical tube (26) communicated with the cylindrical tube (25), a length of the conical tube (26) is greater than a length of the cylindrical tube (25), the conical tube (26) is communicated with the third chamber (13), and the cylindrical tube (25) is communicated with the air intake portion (22) through a respective one of the plurality of ventilation grooves (24).

6. The separation structure according to claim 5, wherein the main body (10) is further provided with a plurality of air outlet tubes (14), each of which corresponds to a respective one of the plurality of sedimentation portions (23) and is received within the cylindrical tube (25).

7. The separation structure according to claim 6, further comprising a filter cotton (40), a recess is defined by the main body (10) to form a fourth chamber (15), the plurality of air outlet tubes (14) are communicated with the fourth chamber (15), and the filter cotton (40) is received in the fourth chamber (15) and covers the plurality of air outlet tubes (14).

8. The separation structure according to claim 5, wherein a distance from a center of the cylindrical tube (25) to a center of the air intake portion (22) is L, and a ratio of 2L to a maximum inner diameter of the air intake portion (22) is in a range of 1.8 to 2.5.

9. The separation structure according to claim 5, wherein a ratio of a maximum inner diameter of the air intake portion (22) to a maximum width of each of the plurality of ventilation grooves (24) is in a range of 4.5 to 5.5.

10. The separation structure according to claim 1, wherein the main body (10) is further provided with an air inlet (16) communicated with the first chamber (11).

## Patentansprüche

1. Trennvorrichtung für einen Staubbecher eines Staubsaugers, wobei die Trennvorrichtung einen Hauptkörper (10) und eine Trenneinrichtung (20) umfasst, die Trenneinrichtung (20) fest in einem Innenraum des Hauptkörpers (10) angebracht ist, der Innenraum des Hauptkörpers (10) durch die Trenneinrichtung (20) in eine erste Kammer (11), eine zweite Kammer (12) und eine dritte Kammer (13) unterteilt ist, die Trenneinrichtung (20) mit einem Durchgangsloch (21), einem Lufteintrittsabschnitt (22) und einer Vielzahl von Sedimentationsabschnitten (23), die mit dem Lufteintrittsabschnitt (22) in Verbindung stehen, bereitgestellt ist, die Vielzahl von Sedimentationsabschnitten (23) um den Lufteintrittsabschnitt (22) herum angeordnet sind, eine Länge des Lufteintrittsabschnitts (22) kleiner als eine Länge jedes der Vielzahl von Sedimentationsabschnitten (23) ist, der Lufteintrittsabschnitt (22) mit der zweiten Kammer (12) in Verbindung steht, die Vielzahl von Sedimentationsabschnitten (23) mit der dritten Kammer (13) in Verbindung stehen und die erste Kammer (11) mit der zweiten Kammer (12) über das Durchgangsloch (21) in Verbindung steht, **dadurch gekennzeichnet, dass** ein unterer Abschnitt der zweiten Kammer (12) von der dritten Kammer (13) so getrennt ist, dass kleine Abfallpartikel getrennt an Böden der zweiten Kammer (12) und der dritten Kammer (13) abgelagert werden.

2. Trennvorrichtung nach Anspruch 1, wobei ein Verhältnis der Länge jedes der Vielzahl von Sedimentationsabschnitten (23) zu der Länge des Lufteintrittsabschnitts (22) in einem Bereich von 1,5 bis 2,5 liegt.

3. Trennvorrichtung nach Anspruch 1, ferner umfassend ein Filtersieb (30), das entlang eines Umfangs der Trenneinrichtung (20) angeordnet ist und das Durchgangsloch (21) abdeckt.

4. Trennvorrichtung nach Anspruch 1, wobei die Trenneinrichtung (20) mit einer Vielzahl von Belüftungsnuten (24) bereitgestellt ist, von denen jede einem jeweiligen der Vielzahl von Sedimentationsabschnitten (23) entspricht, und die Vielzahl von Sedimentationsabschnitten (23) mit dem Lufteintrittsabschnitt (22) durch die Vielzahl von Belüftungsnuten (24) in Verbindung stehen.

5. Trennvorrichtung nach Anspruch 4, wobei jeder der Vielzahl von Sedimentationsabschnitten (23) ein zylindrisches Rohr (25) und ein konisches Rohr (26), das mit dem zylindrischen Rohr (25) in Verbindung steht, umfasst, eine Länge des konischen Rohrs (26) größer als eine Länge des zylindrischen Rohrs (25) ist, das konische Rohr (26) mit der dritten Kammer (13) in Verbindung steht und das zylindrische Rohr (25) mit dem Lufteintrittsabschnitt (22) durch eine jeweilige der Vielzahl von Belüftungsnuten (24) in Verbindung steht.

6. Trennvorrichtung nach Anspruch 5, wobei der Hauptkörper (10) ferner mit einer Vielzahl von Luftauslassrohren (14) bereitgestellt ist, von denen jedes einem jeweiligen der Vielzahl von Sedimentationsabschnitten (23) entspricht und innerhalb des zylindrischen Rohrs (25) aufgenommen ist.

7. Trennvorrichtung nach Anspruch 6, ferner umfassend eine Filterwatte (40), wobei eine Aussparung durch den Hauptkörper (10) definiert ist, um eine vierte Kammer (15) zu bilden, die Vielzahl von Luftauslassrohren (14) mit der vierten Kammer (15) in Verbindung stehen und die Filterwatte (40) in der vierten Kammer (15) aufgenommen ist und die Vielzahl von Luftauslassrohren (14) abdeckt.

8. Trennvorrichtung nach Anspruch 5, wobei ein Abstand von einer Mitte des zylindrischen Rohrs (25) zu einer Mitte des Lufteintrittsabschnitts (22) L beträgt und ein Verhältnis von 2L zu einem maximalen Innendurchmesser des Lufteintrittsabschnitts (22) in einem Bereich von 1,8 bis 2,5 liegt.

9. Trennvorrichtung nach Anspruch 5, wobei ein Verhältnis eines maximalen Innendurchmessers des Lufteintrittsabschnitts (22) zu einer maximalen Breite jeder der Vielzahl von Belüftungsnuten (24) in einem Bereich von 4,5 bis 5,5 liegt.

10. Trennvorrichtung nach Anspruch 1, wobei der Hauptkörper (10) ferner mit einem Lufteinlass (16) bereitgestellt ist, der mit der ersten Kammer (11) in Verbindung steht.

## Revendications

1. Structure de séparation pour un bac à poussière d'un aspirateur, la structure de séparation comprenant un corps principal (10) et un séparateur (20), le séparateur (20) est monté de manière fixe dans un espace intérieur du corps principal (10), l'espace intérieur du corps principal (10) est divisé par le séparateur (20) en une première chambre (11), une deuxième chambre (12) et une troisième chambre (13), le séparateur (20) est pourvu d'un trou de passage (21), d'une portion d'admission d'air (22) et d'une pluralité de portions de sédimentation (23) communiquant avec la portion d'admission d'air (22), la pluralité de portions de sédimentation (23) sont agencées autour de la portion d'admission d'air (22), une longueur de la portion d'admission d'air (22) est inférieure à une longueur de chacune de la pluralité de portions de sédimentation (23), la portion d'admission d'air (22) est en communication avec la deuxième chambre (12), la pluralité de portions de sédimentation (23) sont en communication avec la troisième chambre (13), et la première chambre (11) est en communication avec la deuxième chambre (12) par l'intermédiaire du trou de passage (21), **caractérisée en ce que**
une portion inférieure de la deuxième chambre (12) est séparée de la troisième chambre (13), de telle sorte que de petites particules de déchets sont déposées séparément au fond de la deuxième chambre (12) et de la troisième chambre (13).

2. Structure de séparation selon la revendication 1, dans laquelle un rapport entre la longueur de chacune de la pluralité de portions de sédimentation (23) et la longueur de la portion d'admission d'air (22) est dans une plage de 1,5 à 2,5.

3. Structure de séparation selon la revendication 1, comprenant en outre une crépine (30) agencée le long d'une périphérie du séparateur (20) et recouvrant le trou de passage (21).

4. Structure de séparation selon la revendication 1, dans laquelle le séparateur (20) est pourvu d'une pluralité de rainures de ventilation (24), dont chacune correspondant à une portion respective de la pluralité de portions de sédimentation (23), et la pluralité de portions de sédimentation (23) sont en communication avec la portion d'admission d'air (22) à travers la pluralité de rainures de ventilation (24).

5. Structure de séparation selon la revendication 4, dans laquelle chacune de la pluralité de portions de sédimentation (23) comprend un tube cylindrique (25) et un tube conique (26) en communication avec le tube cylindrique (25), une longueur du tube conique (26) est supérieure à une longueur du tube cylindrique (25), le tube conique (26) est en communication avec la troisième chambre (13), et le tube cylindrique (25) est en communication avec la portion d'admission d'air (22) à travers une rainure respective de la pluralité de rainures de ventilation (24).

6. Structure de séparation selon la revendication 5, dans laquelle le corps principal (10) est en outre pourvu d'une pluralité de tubes de sortie d'air (14), dont chacun correspond à une portion respective de la pluralité de portions de sédimentation (23) et est reçu au sein du tube cylindrique (25).

7. Structure de séparation selon la revendication 6, comprenant en outre un coton filtrant (40), un renfoncement est défini par le corps principal (10) pour former une quatrième chambre (15), la pluralité de tubes de sortie d'air (14) sont en communication avec la quatrième chambre (15), et le coton filtrant (40) est reçu dans la quatrième chambre (15) et recouvre la pluralité de tubes de sortie d'air (14).

8. Structure de séparation selon la revendication 5, dans laquelle une distance entre un centre du tube cylindrique (25) et un centre de la portion d'admission d'air (22) est L, et un rapport entre 2L et un diamètre interne maximal de la portion d'admission d'air (22) est dans une plage de 1,8 à 2,5.

9. Structure de séparation selon la revendication 5, dans laquelle un rapport entre un diamètre interne maximal de la portion d'admission d'air (22) et une largeur maximale de chacune de la pluralité de rainures de ventilation (24) est dans une plage de 4,5 à 5,5.

10. Structure de séparation selon la revendication 1, dans laquelle le corps principal (10) est en outre pourvu d'une entrée d'air (16) en communication avec la première chambre (11).
